# EUROPÄISCHE PATENTANMELDUNG

(11) **EP 4 647 274 A1**
(43) Veröffentlichungstag der Anmeldung: **12.11.2025**
(21) Anmeldenummer: 25170768.3
(22) Anmeldetag: 15.04.2025
(51) Int. Cl.: B60C 9/09, B60C 15/00, B60C 9/04

(54) **FAHRZEUGREIFEN**

(30) Priorität: 07.05.2024 DE 102024204286
(71) Anmelder: Continental Reifen Deutschland GmbH, 30175 Hannover (DE)
(72) Erfinder: Strübel, Christian, 30175 Hannover (DE); Menz, Rüdiger, 30175 Hannover (DE); Funk-Friedek, Sascha, 30175 Hannover (DE); Römer, Justus, 30175 Hannover (DE); Brüggemann, Carina, 30175 Hannover (DE)
(74) Vertreter: Continental Corporation

(57) **Zusammenfassung**

Die Erfindung betrifft einen Fahrzeugreifen mit einer Karkasseinlage (5) aus einer inneren Karkasslage (10) und einer gegenüber der inneren Karkasslage (10) in Richtung zur Reifenaußenseite versetzt sowie in Kontakt mit der inneren Karkasslage (10) verlaufenden, äußeren Karkasslage (11, 12),
wobei die innere Karkasslage (10) in jedem Wulstbereich (6) um den Wulstkern (7) umgeschlagen ist und einen Lagenhochschlag (10a) mit einem Hochschlagende (10a') aufweist,
wobei die äußere Karkasslage (11, 12) radial außerhalb der Kernreiter (8) ohne die Wulstkerne (7) zu umschlingen in Kontakt mit der inneren Karkasslage (10) verläuft und zwei Karkasslagenenden (11b', 12b') aufweist.

Die Karkasslagenenden (11b', 12b') der äußeren Karkasslage (11, 12) liegen im Bereich der jeweiligen Seitenwand (3), wobei sich jedes Karkasslagenende (11b', 12b') bezogen auf das Hochschlagende (10a') des Lagenhochschlags (10a) der inneren Karkasslage (10) innerhalb von einem als kleinstmöglichen Abstand ermittelten Abstand (a₁, a₂) von bis zu 20,0 mm befindet.

## Beschreibung

Die Erfindung betrifft einen Fahrzeugreifen mit einer Karkasseinlage, Seitenwänden und Wulstbereichen mit je einem Wulstkern und einem auf diesem befindlichen Kernreiter, wobei die Karkasseinlage aus einer inneren Karkasslage und einer gegenüber der inneren Karkasslage in Richtung zur Reifenaußenseite versetzt sowie in Kontakt mit der inneren Karkasslage verlaufenden, äußeren Karkasslage gebildet ist, wobei die Karkasslagen jeweils aus in eine Karkassgummierung eingebetteten kreuzungsfrei verlaufenden Korden, insbesondere textilen Korden, bestehen,
wobei die innere Karkasslage in jedem Wulstbereich von der Reifeninnenseite zur Reifenaußenseite um den Kernreiter und den Wulstkern umgeschlagen ist und reifenaußenseitig einen Lagenhochschlag mit einem Hochschlagende aufweist, wobei die äußere Karkasslage radial außerhalb der Kernreiter ohne die Wulstkerne zu umschlingen in Kontakt mit der inneren Karkasslage verläuft und zwei Karkasslagenenden aufweist.

Ein derartiger Fahrzeugreifen ist beispielsweise aus der DE 10 2014 222 306 A1 bekannt. Dieser Reifen weist eine Karkasseinlage mit einer inneren Karkasslage und einer äußeren Karkasslage auf. Die innere Karkasslage ist in jedem Wulstbereich um den Wulstkern umgeschlagen. Der Elastizitätsmodul der Festigkeitsträger der Karkasslagen und die Dichte, in welcher die Festigkeitsträger in den Karkasslagen angeordnet sind, unterscheiden sich voneinander, wodurch der Reifen eine gute Haltbarkeit und einen reduzierten Rollwiderstand aufweisen soll. Gemäß einem Ausführungsbeispiel verläuft die äußere Karkasslage radial außerhalb sowie reifenaußenseitig der Kernreiter ohne die Wulstkerne zu umschlingen und endet reifenaußenseitig neben den Wulstkernen. Die Festigkeitsträger der Karkasslagen verlaufen zur Umfangsrichtung unter einem Winkel von 85° bis 90°, wobei sie - bei von 90° abweichenden Winkel - entgegengesetzt zur Umfangsrichtung geneigt verlaufen (entgegengesetzte Steigungsrichtung).

Ferner ist aus der DE 10 2021 213 750 A1 ein Fahrzeugluftreifen mit Wulstbereichen mit je einem Wulstkern, einem Kernreiter und einer reifeninnenseitig des Wulstkerns verbauten Verstärkungslage bekannt, welche zwischen der Karkasslage und dem Kernreiter oder an der dem Kernreiter abgewandten Seite der Karkasslage verlaufen kann. Gemäß einer Ausführungsform ist radial innerhalb der Karkasslage eine weitere Verstärkungslage verbaut. Die Verstärkungslagen bestehen bevorzugt aus in Gummimaterial eingebetteten Festigkeitsträgern, welche von den in der Karkasslage verbauten Festigkeitsträgern verschieden sind. Die erwähnte, weitere Verstärkungslage bildet daher eine innere Karkasslage. Dieser Fahrzeugluftreifen soll im Hinblick auf die Seitenwandrobustheit, einen geringen Rollwiderstand und sein Geräuschverhalten gut ausbalanciert sein.

Es ist bekannt, dass fortlaufend Bestrebungen bestehen, bei Kraftfahrzeugen den "Wirkungsgrad" weiter zu verbessern. Der Wirkungsgrad ist das Verhältnis zwischen der abgegebenen Bewegungsenergie und zugeführter Leistung und gibt daher in erster Linie Auskunft über die Leistungsflüsse durch den Fahrzeugreifen bei angetriebenem Fahrzeugrad (Felge mit Fahrzeugreifen). Die Leistungszufuhr erfolgt dabei über den jeweiligen Motor (Elektromotor oder Verbrennungsmotor). Im Fall eines angetriebenen Fahrzeugrades herrscht an diesem ein Antriebs- bzw. ein Bremsmoment, welches über den Fahrzeugreifen, insbesondere über den Gürtel und die Seitenwandbereiche, zur Felge übertragen wird. Ein Teil dieses Momentes wird durch Zugkräfte in der Karkasseinlage bzw. den Karkasslagen der Karkasseinlage übertragen. Dabei wird die Karkassgummierung, insbesondere im Bereich zwischen den Karkasskorden, zwangsläufig auf Schub belastet, d.h. der Leistungsfluss erfolgt somit auch über Karkassgummierung, wodurch sich diese erwärmt und Energie dissipiert wird. In der Folge steigt die Verlustleistung (Differenz zwischen aufgenommener Leistung (Leistungsaufnahme) und der gewünschten Form abgegebener Leistung (Leistungsabgabe)), sodass der Wirkungsgrad sinkt. Bei Elektro- und Hybridfahrzeugen ist der Wirkungsgrad zusätzlich für die Rekuperation von Bedeutung, da bei einem höheren Wirkungsgrad beim Bremsen ein größerer Teil der Bremsenergie in die Batterie zurückgeführt wird.

Bei Fahrzeugreifen der eingangs genannten Art trägt die radial äußere Karkasslage zu einer Verbesserung der Steifigkeit im oberen Seitenwandbereich bei, was für den Wirkungsgrad günstig ist. Gleichzeitig trägt die radial äußere Karkasslage auch zum Reifengewicht bei und sorgt somit für ein Ansteigen des Rollwiderstands.

Der Erfindung liegt die Aufgabe zugrunde, bei einem Fahrzeugreifen der eingangs genannten Art unter Aufrechterhaltung eines hohen Wirkungsgrads den Rollwiderstand merklich zu verringern.

Gelöst wird die gestellte Aufgabe erfindungsgemäß dadurch, dass die Karkasslagenenden der äußeren Karkasslage im Bereich der jeweiligen Seitenwand liegen und sich jedes Karkasslagenende bezogen auf das Hochschlagende des Lagenhochschlags der inneren Karkasslage innerhalb von einem als kleinstmöglichen Abstand ermittelten Abstand von bis zu 20,0 mm befindet.

Ein solche Ausführung der äußeren Karkasslage stellt einerseits die Aufrechterhaltung einer hohen Steifigkeit in den oberen (radial äußeren) Seitenwandbereichen sicher, sodass die Energiedissipation, welche beim über die Karkassgummierung erfolgenden Leistungsfluss auftritt, gering gehalten wird und somit ein hoher Wirkungsgrad erhalten bleibt. Gleichzeitig ist die mit der radial äußeren Karkasslage einhergehende Gewichtzunahme des Reifens gegenüber bekannten Ausführungen deutlich geringer, wodurch der Rollwiderstand reduziert ist.

Gemäß einer bevorzugten Ausführung verläuft der Lagenhochschlag der inneren Karkasslage in radialer Richtung über den Kernreiter hinaus, sodass das Hochschlagende des Lagenhochschlags innerhalb der jeweiligen Seitenwand liegt. In der Folge ist die radial äußere Karkasslage - entsprechend dem erwähnten zum Hochschlagende des Lagenhochschlags der inneren Karkasslage vorliegenden Abstand - in einer entsprechenden Länge ausgeführt, was zu einer zusätzlichen Verringerung des Rollwiderstands beiträgt.

Gemäß einer weiteren bevorzugten Ausführung beträgt der Abstand, innerhalb von welchem sich jedes Karkasslagenende der äußeren Karkasslage bezogen auf das Hochschlagende des Lagenhochschlags der inneren Karkasslage befindet, 5,0 mm bis 20,0 mm, insbesondere bis zu 15,0 mm, bevorzugt 7,0 mm bis 13,0 mm, besonders bevorzugt 8,0 mm bis 12,0 mm. Dies trägt zu einer besonders vorteilhaften Lösung des dargelegten Zielkonflikts - nämlich der Aufrechterhaltung eines hohen Wirkungsgrads und der Verringerung des Rollwiderstands - bei.

Vorteilhaft ist ferner eine Ausgestaltung, bei welcher jedes Karkasslagenende der äußeren Karkasslage am Lagenhochschlag der inneren Karkasslage liegt. Diese Maßnahme ist vor allem für die Seitenwandsteifigkeit günstig.

Vorteilhaft ist ferner eine alternative Ausgestaltung, bei welcher jedes Karkasslagenende der äußeren Karkasslage radial außerhalb des Hochschlagendes des Lagenhochschlags der inneren Karkasslage liegt. Diese Ausgestaltung ist vor allem für den Rollwiderstand besonders günstig.

Gemäß einer weiteren bevorzugten Ausführung verlaufen die Korde der Karkasslagen zur Umfangsrichtung unter einem Winkel von 70° bis 90°.

Gemäß einer weiteren bevorzugten Ausführung verlaufen die Korde der äußeren Karkasslage linkssteigend.

Bei den letzten beiden, bevorzugten Ausführungen besteht eine erste vorteilhafte Weiterentwicklung darin, dass der Winkel, unter welchem die Korde der inneren Karkasslage zur Umfangsrichtung verlaufen, 70° bis 86°, insbesondere 75° bis 80°, bevorzugt 77° bis 79°, beträgt. Diese Maßnahme trägt zusätzlich zur Aufrechterhaltung eines hohen Wirkungsgrads bei.

Bei dieser vorteilhaften Weiterentwicklung ist es zudem günstig, wenn die Korde der inneren Karkasslage rechtssteigend verlaufen.

Bei den letzten beiden, bevorzugten Ausführungen besteht eine zweite vorteilhafte Weiterentwicklung darin, dass der Winkel, unter welchem die Korde der inneren Karkasslage zur Umfangsrichtung verlaufen, 88° bis 90°, insbesondere zumindest 89°, bevorzugt 90°, beträgt.

Vorteilhaft ist es ferner, wenn der Winkel, unter welchem die Korde der äußeren Karkasslage zur Umfangsrichtung verlaufen, 70° bis 86°, insbesondere 75° bis 80°, bevorzugt 77° bis 79°, beträgt.

Gemäß einer weiteren bevorzugten Ausführung befindet sich das Hochschlagende des Lagenhochschlags der inneren Karkasslage - bezogen auf eine im Querschnitt in axialer Richtung durch den gegenseitigen Anschluss zwischen Wulstsohle und Wulstferse des jeweiligen Hornprofils verlaufende Linie - in einer in radialer Richtung ermittelten Höhe von zumindest 35,0 mm und höchstens der um 17,0 mm verringerten Querschnittshöhe des Fahrzeugreifens.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 einen Teilquerschnitt eines Fahrzeugluftreifens mit einer ersten Ausführungsform der Erfindung,
Fig. 2 einen Teilquerschnitt eines Fahrzeugluftreifens mit einer zweiten Ausführungsform der Erfindung,
Fig. 3 eine Draufsicht auf Abschnitte von Karkasslagen einer Karkasseinlage gemäß einer ersten Variante und
Fig. 4 eine Draufsicht auf Abschnitte von Karkasslagen einer Karkasseinlage gemäß einer zweiten Variante.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart, für Felgen mit einem ganzzahligen Felgendurchmesser von 13 Zoll bis 24 Zoll, insbesondere von 18 Zoll bis 23 Zoll. Besonders bevorzugt wird der Fahrzeugreifen auf einer Antriebsachse montiert.

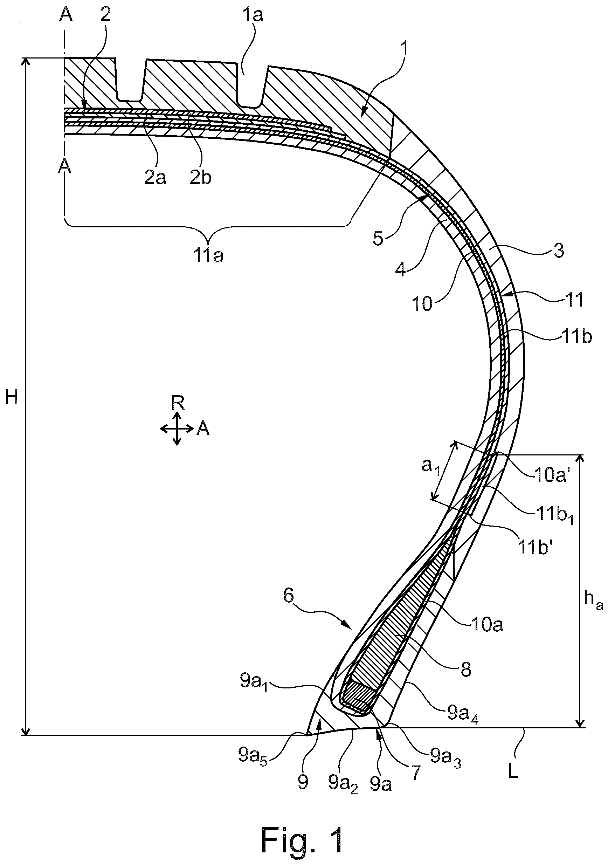

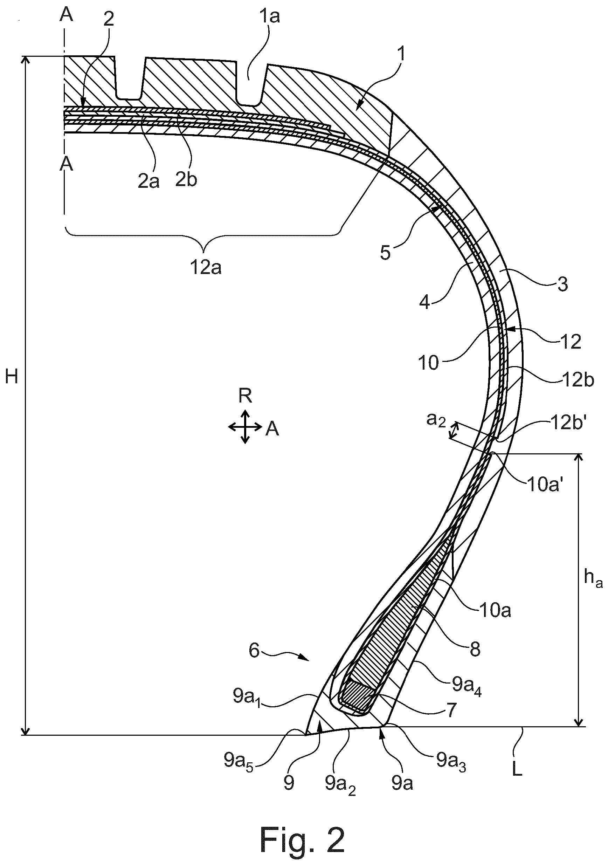

Fig. 1 und Fig. 2 zeigen jeweils eine Hälfte eines Querschnitts eines Fahrzeugluftreifens, welcher ein PKW-Reifen ist. Die radiale Richtung ist durch einen Doppelpfeil R, die axiale Richtung ist durch einen Doppelpfeil A und die Reifenäquatorialebene ist durch eine Linie A-A angedeutet. Ferner ist die Querschnittshöhe H des Fahrzeugluftreifens eingezeichnet. Unter der "axialen Richtung" wird die senkrecht zur Reifenäquatorialebene verlaufende Richtung verstanden. Unter der "radialen Richtung" wird die im in axialer Richtung ausgerichteten Querschnitt parallel zur Reifenäquatorialebene verlaufende Richtung verstanden. Die Querschnittshöhe H ist gemäß E.T.R.T.O.-Standards die Differenz zwischen dem Außendurchmesser und dem Felgen-Nenndurchmesser, wobei der Außendurchmesser der Durchmesser des aufgepumpten Reifens an der äußersten Stelle der Lauffläche ist. Der Felgen-Nenndurchmesser ist gemäß E.T.R.T.O.-Standards ein Code ausschließlich für die Durchmesserangabe, wie sie in der Bezeichnung der Reifen- und Felgengrößen enthalten ist. Die Querschnittshöhe H lässt sich in bekannter Weise aus den Dimensionen des jeweiligen Fahrzeugreifens errechnen. Ein Fahrzeugreifen mit der Dimension 205/55 R 16 weist beispielsweise eine errechnete Querschnittshöhe H von 112,75 mm auf (Querschnittshöhe H [mm] = Reifenbreite [mm] x Höhen/Breiten-Verhältnis = 205 mm x 0,55 = 112,75 mm).

Der Fahrzeugluftreifen weist einen profilierten Laufstreifen 1, einen zweilagigen Gürtelverband 2, zwei Seitenwände 3 (jeweils eine zu sehen), eine luftdichte Innenschicht 4, eine Karkasseinlage 5 und zwei Wulstbereich 6 (je einer zu sehen) umfassend jeweils einen Wulstkern 7, einen Kernreiter 8 und ein Hornprofil 9 auf. Die nicht gezeigte Hälfte des Fahrzeugluftreifens ist vorzugsweise übereinstimmend zur gezeigten Hälfte ausgeführt.

Der Laufstreifen 1, der Gürtelverband 2, die Seitenwände 3, die Innenschicht 4, die Wulstkerne 7, die Kernreiter 8 und die Hornprofile 9 sind in insbesondere bekannter Weise ausgeführt.

Der Laufstreifen 1 ist bei den Ausführungsbeispielen einschichtig aufgebaut und enthält eine Rillen 1a umfassende Profilierung.

Der Gürtelverband 2 weist eine radial innere Gürtellage 2a und eine radial äußere Gürtellage 2b auf, wobei die Gürtellagen 2a, 2b jeweils aus in eine Gürtelgummierung eingebetteten, in jeder Gürtellage 2a, 2b parallel zueinander verlaufenden Festigkeitsträgern, beispielsweise aus Textilkorden bekannter Konstruktion, bestehen, wobei die Festigkeitsträger der radial inneren Gürtellage 2a jene der radial äußeren Gürtellage 2b in insbesondere bekannter Weise kreuzen.

Die Seitenwände 3 verlaufen in bekannter Weise zwischen den axial äußeren Enden des Laufstreifens 1 und dem jeweiligen Hornprofil 9 und überlappen mit einem Endabschnitt das jeweilige Hornprofil 9 reifenaußenseitig.

Das Hornprofil 9 weist eine zwischen der Innenschicht 4 und der jeweiligen Seitenwand 3 verlaufende Außenfläche 9a auf, welche sich aus einer zur Innenschicht 4 verlaufenden Innenseite 9a₁, einer Wulstsohle 9a₂, einer Wulstferse 9a₃ und einer zur entsprechenden Seitenwand 3 verlaufenden Außenseite 9a₄ zusammensetzt, wobei die Innenseite 9a₁ und die Wulstsohle 9a₂ über eine Wulstzehe 9a₅ aneinander anschließen. Die Wulstsohle 9a₂ verläuft, im Querschnitt betrachtet, gerade oder ist, im Querschnitt betrachtet, aus mehreren gerade verlaufenden Abschnitten zusammengesetzt. Die Wulstferse 9a₃ verläuft, im Querschnitt betrachtet, zumindest über einen unmittelbar an die Wulstsohle 9a₂ anschließenden Abschnitt nach außen gebogen (bogenförmig) sowie insbesondere durchgehend nach außen gebogen.

Die Karkasseinlage 5 ist aus einer inneren Karkasslage 10 und einer gegenüber der inneren Karkasslage 10 in Richtung zur Reifenaußenseite versetzt verlaufenden, die innere Karkasslage 10 abschnittsweise kontaktierenden, äußeren Karkasslage 11 (Fig. 1), 12 (Fig. 2) gebildet.

Die innere Karkasslage 10 verläuft in Kontakt mit sowie entlang der Innenschicht 4 und ist in jedem Wulstbereich 6 von der Reifeninnenseite kommend in Richtung zur Reifenaußenseite, also von innen nach außen, um den Kernreiter 8 und den Wulstkern 7 umgeschlagen und weist reifenaußenseitig einen zwischen dem jeweiligen Hornprofil 9 und dem Kernreiter 8 verlaufenden Lagenhochschlag 10a auf, welcher in radialer Richtung über den Kernreiter 8 und das radial äußere Ende des Hornprofils 9 hinausverläuft und ein im Bereich der Seitenwand 3 liegendes Hochschlagende 10a' aufweist. Das Hochschlagende 10a' befindet sich, im in axialer Richtung verlaufenden Querschnitt betrachtet, in einer in radialer Richtung ermittelten Höhe hₐ, welche sich auf eine in axialer Richtung durch den gegenseitigen Anschluss zwischen Wulstsohle 9a₂ und Wulstferse 9a₃ verlaufende Linie L bezieht und zumindest 35,0 mm und höchstens der um 17,0 mm verringerten Querschnittshöhe H beträgt.

Die äußere Karkasslage 11, 12 ist um die Wulstkerne 7 nicht umgeschlagen, wie nachfolgend genauer erläutert.

Die radial äußere Karkasslage 11, 12 setzt sich aus einem radial innerhalb des Laufstreifens 1 befindlichen, radial äußeren Lagenabschnitt 11a (Karkasslage 11), 12a (Karkasslage 12) und zwei in Kontakt mit den Seitenwänden 3 verlaufenden, seitlichen Lagenabschnitten 11b (Karkasslage 11), 12b (Karkasslage 12) zusammen. Der radial äußere Lagenabschnitt 11a, 12a verläuft abschnittsweise zwischen der inneren Karkasslage 10 und dem Gürtelverband 2 sowie abschnittsweise zwischen der inneren Karkasslage 10 und dem Laufstreifen 1. Die seitlichen Lagenabschnitte 11b, 12b verlaufen zwischen der jeweiligen Seitenwand 3 und der inneren Karkasslage 10 und weisen je ein innerhalb der jeweiligen Seitenwand 3 liegendes Karkasslagenende 11b' (Lagenabschnitt 11b), 12b' (Lagenabschnitt 12b) auf.

Bei der in Fig. 1 gezeigten ersten Ausführungsform deckt der seitliche Lagenabschnitt 11b das Hochschlagende 10a' reifenaußenseitig ab, sodass das Karkasslagenende 11b' am Lagenhochschlag 10a liegt und der seitliche Lagenabschnitt 11b einen zwischen dem Lagenhochschlag 10a und der Seitenwand 11 verlaufenden, endseitigen Lagenabschnittteil 11b₁ aufweist. Das Karkasslagenende 11b' weist zum Hochschlagende 10a' einen als kleinstmöglichen Abstand ermittelten Abstand a₁ von 5,0 mm bis 20,0 mm, insbesondere von bis zu 15,0 mm, bevorzugt von 7,0 mm bis 13,0 mm, besonders bevorzugt von 8,0 mm bis 12,0 mm, auf.

Bei der in Fig. 2 gezeigten zweiten Ausführungsform endet der seitliche Lagenabschnitt 12b vor dem Hochschlagende 10a', deckt dieses somit nicht ab, wobei das Karkasslagenende 12b' zum Hochschlagende 10a' einen als kleinstmöglichen Abstand ermittelten Abstand a₂ von 5,0 mm bis 20,0 mm, insbesondere von bis zu 15,0 mm, bevorzugt von 7,0 mm bis 13,0 mm, besonders bevorzugt von 8,0 mm bis 12,0 mm, aufweist.

Die Karkasslagen 10, 11, 12 bestehen jeweils aus in eine Karkassgummierung eingebetteten, kreuzungsfrei sowie im Wesentlichen parallel zueinander verlaufenden, textilen Korden, welche insbesondere aus Polyester oder Polyamid gefertigt sind.

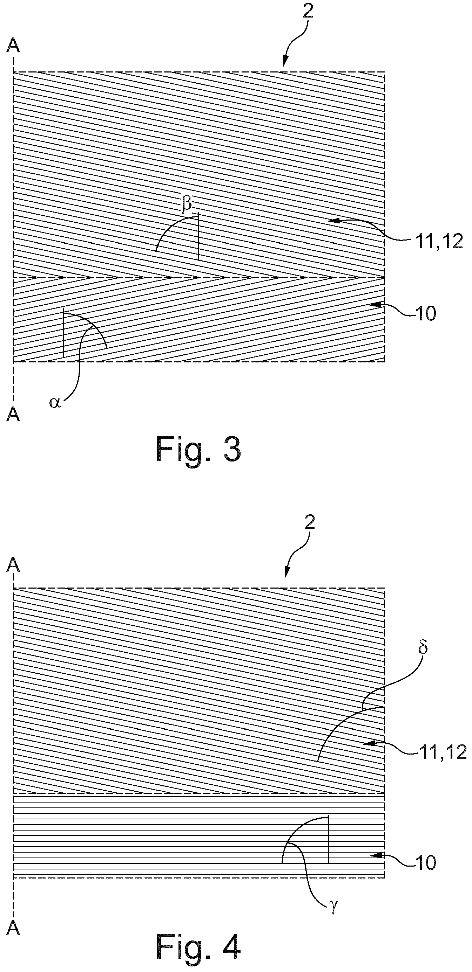

Fig. 3 und Fig. 4 zeigen schematisch Umfangsabschnitte der inneren Karkasslage 10 und der äußeren Karkasslage 11, 12 (je nach Ausführform) zur Erläuterung der Orientierung ihrer textilen Korden, wobei die textilen Korde schematisch durch Striche angedeutet sind. Fig. 3 zeigt eine erste Variante und Fig. 4 zeigt eine zweite Variante, wobei die erste und die zweite Variante jeweils mit der ersten Ausführungsform (Fig. 1, Karkasslagen 10, 11) und der zweiten Ausführungsform (Fig. 2, Karkasslagen 10, 12) kombinierbar sind.

Bei der ersten Variante - siehe Fig. 3 - verlaufen die textilen Korde der inneren Karkasslage 10 in Draufsicht zur Umfangsrichtung unter einem Winkel α von 70° bis 86°, insbesondere von 75° bis 80°, bevorzugt von 77° bis 79°, sowie rechtssteigend. "Rechtssteigend verlaufen" bedeutet, dass die textilen Korde, in Draufsicht mit in vertikaler Richtung ausgerichteter Umfangsrichtung (bzw. mit in vertikaler Richtung ausgerichteter Reifenäquatorialebene) betrachtet, derart zur Umfangsrichtung geneigt sind, dass sie von links unten nach rechts oben verlaufen. Die textilen Korde der äußeren Karkasslage 11, 12 verlaufen in Draufsicht relativ zur Umfangsrichtung unter einem Winkel β von 70° bis 86°, insbesondere von 75° bis 80°, bevorzugt von 77° bis 79°, sowie linkssteigend. "Linkssteigend verlaufen" bedeutet, dass die textilen Korde, in Draufsicht mit in vertikaler Richtung ausgerichteter Umfangsrichtung (bzw. mit in vertikaler Richtung ausgerichteter Reifenäquatorialebene) betrachtet, derart relativ zur Umfangsrichtung geneigt sind, dass sie von rechts unten nach links oben verlaufen. Die textilen Korde der inneren Karkasslage 10 verlaufen bezüglich der Umfangsrichtung daher gegensinnig geneigt zu den textilen Korden der äußeren Karkasslage 11, 12.

Bei der zweiten Variante - siehe Fig. 4 - verlaufen die textilen Korde der inneren Karkasslage 10 in Draufsicht zur Umfangsrichtung unter einem Winkel γ von 88° bis 90°, insbesondere von zumindest 89°, bevorzugt von 90°. Die textilen Korde der äußeren Karkasslage 11, 12 verlaufen in Draufsicht zur Umfangsrichtung unter einem Winkel δ von 70° bis 86°, insbesondere von 75° bis 80°, bevorzugt von 77° bis 79°, sowie linkssteigend.

Die Erfindung ist auf die beschriebenen Ausführungsbeispiele nicht beschränkt.

### Bezugszeichenliste

- 1: Laufstreifen
- 1a: Rille
- 2: Gürtelverband
- 2a: radial innere Gürtellage
- 2b: radial äußere Gürtellage
- 3: Seitenwand
- 4: Innenschicht
- 5: Karkasseinlage
- 6: Wulstbereich
- 7: Wulstkern
- 8: Kernreiter
- 9: Hornprofil
- 9a: Außenfläche
- 9a₁: Innenseite
- 9a₂: Wulstsohle
- 9a₃: Wulstferse
- 9a₄: Außenseite
- 9as: Wulstzehe
- 10: innere Karkasslage
- 1 0a: Lagenhochschlag
- 1 0a': Hochschlagende
- 11: äußere Karkasslage
- 11a: radial äußerer Lagenabschnitt
- 11b: seitlicher Lagenabschnitt
- 11 b₁: endseitiger Lagenabschnittteil
- 11b': Karkasslagenende
- 12: äußere Karkasslage
- 12a: radial äußerer Lagenabschnitt
- 12b: seitlicher Lagenabschnitt
- 12b': Karkasslagenende
- A: Doppelpfeil (axiale Richtung)
- A-A: Linie (Reifenäquatorialebene)
- a₁, a₂: Abstand
- H: Querschnittshöhe
- hₐ: Höhe
- L: Linie
- R: Doppelpfeil (radiale Richtung)
- α, β, γ, δ: Winkel

## Patentansprüche

1. Fahrzeugreifen mit einer Karkasseinlage (5), Seitenwänden (3) und Wulstbereichen (6) mit je einem Wulstkern (7) und einem auf diesem befindlichen Kernreiter (8),
wobei die Karkasseinlage (5) aus einer inneren Karkasslage (10) und einer gegenüber der inneren Karkasslage (10) in Richtung zur Reifenaußenseite versetzt sowie in Kontakt mit der inneren Karkasslage (10) verlaufenden, äußeren Karkasslage (11, 12) gebildet ist, wobei die Karkasslagen (10, 11, 12) jeweils aus in eine Karkassgummierung eingebetteten kreuzungsfrei verlaufenden Korden, insbesondere textilen Korden, bestehen,
wobei die innere Karkasslage (10) in jedem Wulstbereich (6) von der Reifeninnenseite zur Reifenaußenseite um den Wulstkern (7) umgeschlagen ist und reifenaußenseitig einen Lagenhochschlag (10a) mit einem Hochschlagende (10a') aufweist,
wobei die äußere Karkasslage (11, 12) radial außerhalb der Kernreiter (8) ohne die Wulstkerne (7) zu umschlingen in Kontakt mit der inneren Karkasslage (10) verläuft und zwei Karkasslagenenden (11b', 12b') aufweist,
**dadurch gekennzeichnet,**
**dass** die Karkasslagenenden (11b', 12b') der äußeren Karkasslage (11, 12) im Bereich der jeweiligen Seitenwand (3) liegen und sich jedes Karkasslagenende (11b', 12b') bezogen auf das Hochschlagende (10a') des Lagenhochschlags (10a) der inneren Karkasslage (10) innerhalb von einem als kleinstmöglichen Abstand ermittelten Abstand (a₁, a₂) von bis zu 20,0 mm befindet.

2. Fahrzeugreifen nach Anspruch 1, **dadurch gekennzeichnet, dass** der Lagenhochschlag (10a) der inneren Karkasslage (10) in radialer Richtung (Doppelpfeil R) über den Kernreiter (8) hinausverläuft, sodass das Hochschlagende (10a') des Lagenhochschlags (10a) innerhalb der jeweiligen Seitenwand (3) liegt.

3. Fahrzeugreifen nach Anspruch 1 oder 2, **dadurch gekennzeichnet, dass** der Abstand (a₁, a₂), innerhalb von welchem sich jedes Karkasslagenende (11b', 12b') der äußeren Karkasslage (11, 12) bezogen auf das Hochschlagende (10a') des Lagenhochschlags (10a) der inneren Karkasslage (10) befindet, 5,0 mm bis 20,0 mm, insbesondere bis zu 15,0 mm, bevorzugt 7,0 mm bis 13,0 mm, besonders bevorzugt 8,0 mm bis 12,0 mm, beträgt.

4. Fahrzeugreifen nach einem der Ansprüche 1 bis 3, **dadurch gekennzeichnet, dass** jedes Karkasslagenende (11b') der äußeren Karkasslage (11) am Lagenhochschlag (10a) der inneren Karkasslage (10) liegt.

5. Fahrzeugreifen nach einem der Ansprüche 1 bis 3, **dadurch gekennzeichnet, dass** jedes Karkasslagenende (12b') der äußeren Karkasslage (12) radial außerhalb des Hochschlagendes (10a') des Lagenhochschlags (10a) der inneren Karkasslage (10) liegt.

6. Fahrzeugreifen nach einem der Ansprüche 1 bis 5, **dadurch gekennzeichnet, dass** die Korde der Karkasslagen (10, 11, 12) zur Umfangsrichtung unter einem Winkel (α, β, γ, δ) von 70° bis 90° verlaufen.

7. Fahrzeugreifen nach einem der Ansprüche 1 bis 6, **dadurch gekennzeichnet, dass** die Korde der äußeren Karkasslage (11, 12) linkssteigend verlaufen.

8. Fahrzeugreifen nach Anspruch 6 oder 7, **dadurch gekennzeichnet, dass** der Winkel (α), unter welchem die Korde der inneren Karkasslage (10) zur Umfangsrichtung verlaufen, 70° bis 86°, insbesondere 75° bis 80°, bevorzugt 77° bis 79°, beträgt.

9. Fahrzeugreifen nach Anspruch 8, **dadurch gekennzeichnet, dass** die Korde der inneren Karkasslage (10) rechtssteigend verlaufen.

10. Fahrzeugreifen nach Anspruch 6 oder 7, **dadurch gekennzeichnet, dass** der Winkel (γ), unter welchem die Korde der inneren Karkasslage (10) zur Umfangsrichtung verlaufen, 88° bis 90°, insbesondere zumindest 89°, bevorzugt 90°, beträgt.

11. Fahrzeugreifen nach einem der Ansprüche 6 bis 10, **dadurch gekennzeichnet, dass** der Winkel (β, δ), unter welchem die Korde der äußeren Karkasslage (11, 12) zur Umfangsrichtung verlaufen, 70° bis 86°, insbesondere 75° bis 80°, bevorzugt 77° bis 79°, beträgt.

12. Fahrzeugreifen nach einem der Ansprüche 1 bis 11, **dadurch gekennzeichnet, dass** sich das Hochschlagende (10a') des Lagenhochschlags (10a) der inneren Karkasslage (10) - bezogen auf eine im Querschnitt in axialer Richtung (Doppelpfeil A) durch den gegenseitigen Anschluss zwischen Wulstsohle (9a₂) und Wulstferse (9as) des jeweiligen Hornprofils (9) verlaufende Linie (L) - in einer in radialer Richtung (Doppelpfeil R) ermittelten Höhe (hₐ) von zumindest 35,0 mm und höchstens der um 17,0 mm verringerten Querschnittshöhe (H) des Fahrzeugreifens befindet.
